# EUROPÄISCHE PATENTANMELDUNG

(11) **EP 4 711 130 A1**
(43) Veröffentlichungstag der Anmeldung: **18.03.2026**
(21) Anmeldenummer: 25198110.6
(22) Anmeldetag: 26.08.2025
(51) Int. Cl.: B32B 17/10, C03C 17/34, C03C 17/22, H05B 3/84, B60S 1/02

(54) **VERBUNDGLAS-SCHEIBE MIT GANZJAHRESFUNKTION, STEUERUNG UND FAHRZEUG**

(30) Priorität: 16.09.2024 DE 102024208801
(71) Anmelder: VOLKSWAGEN AG, 38440 Wolfsburg (DE)
(72) Erfinder: Hacker, Roland, 38440 Wolfsburg (DE)

(57) **Zusammenfassung**

Eine Verbundglas-Scheibe, umfassend eine Außenscheibe, eine Innenscheibe und eine Kunststoffzwischenfolie, die zwischen der Außenscheibe und der Innenscheibe angeordnet ist, ferner umfassend: eine Reflexionsbeschichtung, die auf einer Seite der Außenscheibe aufgebracht ist, die der Kunststoffzwischenlage zugewandt ist, und eine Heizbeschichtung, die auf einer Seite der Innenscheibe aufgebracht ist, die der Kunststoffzwischenlage zugewandt ist, wobei die Heizbeschichtung dazu ausgelegt ist, mit elektrischer Energie mit einer Spannung von 200 V bis 800 V versorgt zu werden, um die Verbundglas-Scheibe zu heizen.

## Beschreibung

Die Erfindung betrifft eine Verbundglas-Scheibe mit Ganzjahresfunktion, die sowohl eine Sonnenschutz- als auch als Heizfunktion hat, sowie eine Steuerung für die Verbundglas-Scheibe und ein Fahrzeug mit der Verbundglas-Scheibe.

Bekannt sind Verbundglas-Scheiben (Frontscheiben), die den Wärmeeintrag durch eine Kombination aus speziellem Glasdesign und Beschichtungen regulieren. Frontscheiben sind häufig aus Verbundglas gefertigt, das aus zwei Glasschichten mit einer dazwischenliegenden Kunststofffolie besteht. Diese Folie hat in der Regel UV-absorbierende Eigenschaften, die das Eindringen von UV-Licht in den Innenraum zusammen mit den Einzelgläsern fast vollständig verhindert. Zusätzlich können Windschutzscheiben mit Infrarot-reflektierenden Beschichtungen versehen sein, die die Wärmestrahlung der Sonne vorrangig im IR-Bereich des Strahlungsspektrums abweisen und gleichzeitig die gesetzlich geforderte Mindest-Lichttransmission im für den Menschen sichtbaren Wellenlängenbereich zwischen 380 nm und 780 nm nicht unterschreitet. Somit wird die Innenraumaufheizung aufgrund der eingetragenen Strahlung verringert.

Ferner ist bekannt, dass Frontscheiben in Fahrzeugen durch eine speziell entwickelte Lüftung beheizt werden, die (warme) Luft über die Innenseite der Scheibe leitet. Die über die Innenseite der Scheibe geleitete Luft wird mittels einer Zuführung von warmer Luft aus Düsen im Armaturenbrett bereitgestellt. Diese Funktion ist besonders nützlich in kalten Jahreszeiten, wenn Frost oder Schnee die Sicht behindern können. Durch das Zirkulieren warmer Luft wird die Frontscheibe aufgetaut oder beschlagfrei gehalten, was die Sichtverhältnisse verbessert bzw. die Sicht durch die Scheibe ermöglicht und somit die Sicherheit beim Fahren erhöht.

DE 10 2009 025 972 A1 offenbart eine Verbundglasscheibe, umfassend ein Substratglas mit einer Dicke von 0,3 mm bis 25 mm, mindestens eine auf dem Substratglas aufgebrachte Schichtstruktur, mindestens eine auf der Schichtstruktur aufgebrachte Polymerschicht mit einer Schichtdicke von 0,2 mm bis 10 mm, ein Deckglas mit einer Dicke von 1,3 mm bis 25 mm auf der Polymerschicht, wobei der mittlere thermische Ausdehnungskoeffizient des Substratglases maximal 18 x 10K größer oder maximal 18 x 10K kleiner ist als der mittlere thermische Ausdehnungskoeffizient des Deckglases und im Temperaturbereich von -40°C bis +90°C die maximale mechanische Spannung der Verbundglasscheibe kleiner oder gleich 7 MPa ist.

Aufgabe der vorliegenden Erfindung ist es, eine verbesserte Frontscheibe bereitzustellen.

Diese Aufgabe wird durch die erfindungsgemäße Verbundglas-Scheibe nach Anspruch 1 gelöst. Diese Aufgabe wird ferner gelöst durch eine Steuereinheit nach Anspruch 8 und durch ein Fahrzeug nach Anspruch 9.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ausführungen der Erfindung beziehen sich auf eine verbesserte Verbundglas-Scheibe, beispielsweise als Frontscheibe für Fahrzeuge, die sowohl im Sommer als auch im Winter optimale Eigenschaften aufweist. Konkret handelt es sich um eine Frontscheibe mit einer Silberschicht auf der Innenseite des Außenglases und einer ITO-, ZNO:Al- oder FTO-Schicht (Indiumzinnoxid, aluminiumdotiertes Zinkoxid oder fluordotiertes Zinnoxid) auf der Außenseite des Innenglases. Durch diese Kombination können die Vorteile beider Beschichtungen genutzt werden: Die Silberschicht reflektiert Sonnenlicht und reduziert somit die Erwärmung des Fahrzeuginnenraumes im Sommer, während die ITO/ZNO:Al/FTO-Schicht eine effiziente Heizfunktion im Winter ermöglicht. Die Heizleistung ist dabei deutlich höher als bei bisherigen Lösungen, was ein schnelleres und effizienteres Entfrosten und Entfeuchten der Scheibe ermöglicht. Zudem wird durch die hohe Betriebsspannung der ITO/ZNO:Al/FTO-Schicht ein geringerer Kabelquerschnitt benötigt.

Eine erfindungsgemäße Verbundglas-Scheibe umfasst eine Außenscheibe, eine Innenscheibe und eine Kunststoffzwischenfolie, die zwischen der Außen- und Innenscheibe angeordnet ist, ferner umfassend: eine Reflexionsbeschichtung, die auf einer Seite der Außenscheibe aufgebracht ist, die der Kunststoffzwischenlage zugewandt ist, und eine Heizbeschichtung, die auf einer Seite der Innenscheibe aufgebracht ist, die der Kunststoffzwischenlage zugewandt ist, wobei die Heizbeschichtung dazu ausgelegt ist, mit elektrischer Energie versorgt zu werden, um die Verbundglas-Scheibe zu heizen.

Verbundglas ist eine Art von Sicherheitsglas, das durch das Laminieren von zwei oder mehr Glasplatten unter Verwendung von Kunststofffolien hergestellt wird. Nach der Ausführung können eine Außenscheibe und eine Innenscheibe durch eine Zwischenschicht aus Kunststoff miteinander verbunden sein. Diese Konstruktion kann für eine erhöhte Verbundfestigkeit und Sicherheit sorgen, da bei einem Bruch die Glasbruchstücke und Splitter überwiegend an der Kunststofffolie haften bleiben. Zusätzlich erlaubt das Verbundglas die Anbringung von speziellen Beschichtungen auf den Innenflächen der Glasplatten, die der Kunststofffolie zugewandt sind, wobei die Beschichtungen dazu dienen können, Sonnenlicht zu reflektieren und die Scheibe zu heizen.

Die Außenscheibe und die Innenscheibe können sich auf zwei Glasplatten beziehen, die in der Verbundglas-Konstruktion, beispielsweise einer Frontscheibe, verwendet werden. Die Außenscheibe ist die äußere Platte, die hin zu einer Außenseite (des Fahrzeugs) angeordnet ist und somit den Umwelteinflüssen wie Sonnenlicht, Wind und Regen ausgesetzt ist. Die Innenscheibe hingegen ist die innere Platte, die einem Innenraum (des Fahrzeugs) zugewandt ist. Beide Scheiben sind durch eine Kunststoffzwischenschicht miteinander verbunden. Nach der Ausführung können auf den Innenflächen (hin zu der Kunststoffzwischenschicht) beider Scheiben spezielle Beschichtungen aufgebracht werden, die jeweils unterschiedliche Funktionen haben: Die Innenseite der Außenscheibe erhält eine Reflexionsbeschichtung zur Reduzierung der Sonneneinstrahlung, während die Innenseite der Innenscheibe eine Heizbeschichtung erhält, die eine effiziente Heizfunktion im Winter ermöglicht.

Die Kunststoffzwischenfolie kann ein wesentlicher Bestandteil der Verbundglas-Scheibe sein, der die beiden Glasplatten miteinander verbindet. Diese Folie kann aus verschiedenen Kunststoffmaterialien bestehen, wobei Polyvinylbutyral (PVB) aufgrund seiner hervorragenden Haftung auf Glas und seiner hohen Transparenz häufig verwendet wird. Die Folie kann auch UV-absorbierende Eigenschaften haben, um schädliche ultraviolette Strahlen zu reduzieren. Die Dicke der Folie kann je nach den spezifischen Anforderungen an die Sicherheit und die Isoliereigenschaften der Frontscheibe variieren. In bestimmten Ausführungen kann die Folie auch farbig oder getönt sein, um zusätzlichen Sonnenschutz oder Privatsphäre zu bieten.

Die Reflexionsbeschichtung in der ausführungsgemäßen Verbundglas-Scheibe (Frontscheibe) wird auf der Innenseite der Außenscheibe aufgebracht und hat die Hauptfunktion, Sonnenlicht, insbesondere infrarotes Licht (beispielsweise Nahinfrarot NIR), zu reflektieren. Die Reflexionsbeschichtung kann aus einer Vielzahl von Schichten bestehen, die in verschiedenen Auftragsverfahren auf der Innenseite der Außenscheibe deponiert bzw. aufgetragen sind. Physikalische Dampfabscheidung (Physical Vapor Deposition, PVD), ist ein solches Verfahren, das zur Beschichtung der Innenseite der Außenscheibe verwendet werden kann. Bei dem Verfahren werden dünne Schichten durch die Verdampfung eines Feststoffs in einem Vakuum erzeugt und auf der Innenseite der Außenscheibe deponiert. Weitere solche Auftragsverfahren können CVD (Chemical Vapor Deposition), ALD (Atomic Layer Deposition), Sputterbeschichtung oder E-Beam-PVD (Elektronenstrahl-PVD) sein.

Die Reflexionsbeschichtung kann durch die Reflexionen und Emissionen an den Grenzschichten der Vielzahl von Schichten mittel konstruktiver und destruktiver Interferenz der resultierenden Teilstrahlen auf eine Reflexion in einem vorbestimmten (vorgewählten) Wellenlängenbereich des Lichtes optimiert sein. Durch das Reflektieren beispielsweise des Sonnenlichts reduziert die Reflexionsbeschichtung die Menge an Wärme, die in ein Inneres des Fahrzeuges auf der Innenseite der Verbundglas-Scheibe (den Fahrzeuginnenraum) eindringt, wodurch im Sommer weniger Erwärmung des Inneren erwartbar sein kann.

Die Reflexionsbeschichtung ist für das menschliche Auge fast unsichtbar, sodass sie die Sicht durch die Scheibe nicht beeinträchtigt. Dies erfüllt im Kontext eines Fahrzeuges die gesetzliche Anforderung, dass mindestens 70 Prozent des sichtbaren Lichts durch die Frontscheibe transmittiert werden müssen. In Kombination mit einer Heizbeschichtung kann dies bei zwei silberhaltigen Beschichtungen noch eingehalten werden, bei drei silberhaltigen Beschichtungen womöglich nicht mehr.

Die Heizbeschichtung in der ausführungsgemäßen Verbundglas-Scheibe (Frontscheibe) kann auf der Innenseite der Innenscheibe aufgebracht werden und dient dazu, die Scheibe bei Bedarf zu erwärmen. Diese Beschichtung kann zugeführte elektrische Energie in Wärmeenergie umwandeln, durch den ohmschen Widerstand der Beschichtung, und erzeugt somit eine Aufheizung der Verbundglas-Scheibe.

Im Gegensatz zu herkömmlichen Heizmethoden, die auf der Zirkulation warmer Luft basieren, kann diese Beschichtung eine direkte und gleichmäßige Erwärmung der gesamten Scheibenfläche ermöglichen. Dies kann das Entfrosten und Entfeuchten der Scheibe in kalten Jahreszeiten erheblich beschleunigen und effizienter gestalten. Eine hohe Betriebsspannung der Heizbeschichtung kann zudem eine Reduzierung der Kabelquerschnitte ermöglichen, was zu einer vereinfachten und kostengünstigeren Installation beiträgt.

Dass die Heizbeschichtung dazu ausgelegt ist mit elektrischer Energie versorgt zu werden, kann bedeuten, dass die Heizbeschichtung ausgelegt ist, elektrischen Strom aufzunehmen und in Wärme umzuwandeln. Dies bedeutet, dass die Beschichtung so konzipiert ist, dass sie einen elektrischen Stromfluss aufnehmen kann, wenn sie an eine Stromquelle angeschlossen wird.

Ein Anschluss an eine Stromquelle kann beispielsweise mittels elektrischer Kontakte an der Verbundglasscheibe erzeugt sein. Beispielsweise sind die Kontakte als Sammelschienen ausgestaltet, die die Heizbeschichtung zum Beispiel parallel zu einer vertikalen Kante der Verbundglasscheibe kontaktieren und somit die elektrische Energieverteilung in der Heizbeschichtung verbessern (gilt als Konsequenz auch die Wärmeenergieverteilung), eine homogenere Verteilung ermöglichen, um ein homogeneres Aufheizen der Verbundglas-Scheibe zu ermöglichen. Ein homogeneres Aufheizen, bessere Transmissionsoptik und IR-reflektierende Hitzeschutz-Funktion sind Verbesserungen gegenüber einer Anordnung von Heizdrähten in der Frontscheibe.

Der Stromfluss kann eine Widerstandsheizung in der Beschichtung verursachen, die dann die Scheibe erwärmt. Die Menge an Wärme, die erzeugt wird, hängt von der Menge an elektrischer Arbeit ab, die der Beschichtung zugeführt wird. Daher ist die Heizbeschichtung so ausgelegt, dass sie mit einer hohen elektrischen Spannung betrieben werden kann, um ein effektiveres Heizen mit geringerem Wärmeverlust zu ermöglichen. Die erhöhte Heizleistung aufgrund der hohen Spannung bietet zudem die Möglichkeit, situations- und funktionsgerecht zu heizen, z. B. bei strengem Frost länger als bei leichtem Frost. Dies bedeutet, dass die Heizdauer genau dosiert werden kann, was wiederum die Effizienz steigert bzw. die knappe Ressource Energie schont. Zudem kann die erfindungsgerechte Ausführung schneller und effizienter eine Frontscheibe aufheizen als alle bekannten technischen Lösungen.

Das Heizen mit der Heizbeschichtung kann die Belüftung (mit warmer Luft aus Lüftungsschlitzen und Luftkanälen) vom Armaturenbrett ersetzen. Somit wird eine "Defrost" und "Defog" Funktion der Scheibe ermöglicht, bei der kein Eiskratzen mehr nötig ist. Ferner bedeutet dies einen Platzgewinn innerhalb des Armaturenbrettes (innerhalb der Instrumententafel).

Dieser Bauraum im Armaturenbrett kann beispielsweise für Displays oder Projektoren beispielsweise für Heads-Up-Displays verwendet werden. Dazu können weitere Reflexions- und Emissionsbeschichtungen an der Verbundglas-Scheibe vorgesehen sein, die ein klares Bild der Heads-Up-Displays ermöglichen, ohne sichtbare Mehrfachreflexionen an mehreren Grenzschichten der Verbundglas-Scheibe. Bei wegfallenden Lüftungsschlitzen können dort verbaute Projektoren beispielsweise einen Bereich an der unteren Kante der Verbundglas-Scheibe anstrahlen. Dieser Bereich kann auch mit schwarzer Farbe bedruckt/beschichtet sein (von außen oder innen oder an einer Zwischenschicht). Somit wird Hintergrundlicht, das die Darstellung der Displays stört, vermieden.

Die Heizbeschichtung kann eine einzelne Schicht sein.

Ferner können in verschiedenen Bereichen der Verbundglas-Scheibe keine Reflexionsbeschichtungen und/oder Heizbeschichtungen vorgesehen sein. Beispielsweise indem in diesen Bereichen keine Schichten aufgetragen werden oder diese Bereiche entschichtet werden. Beispielsweise, um Sensoren, Kameras oder Antennen dahinter in ihrer Funktion nicht zu beeinträchtigen.

Es gibt Ausführungen, bei denen die Reflexionsbeschichtung aus ein-, zwei-, drei- oder vierfachen silberhaltigen Beschichtungen ausgeführt ist.

Eine silberhaltige Beschichtung ist eine Schicht oder ein Schichtsystem, die (das) Silber enthält und auf eine Oberfläche aufgetragen wird. Diese Beschichtung hat die Eigenschaft, dass sie Sonnenlicht, insbesondere im infraroten Bereich, effektiv reflektiert. Das bedeutet, dass ein großer Teil der Sonnenstrahlung, die auf die Oberfläche trifft, zurück in die Umgebung reflektiert wird, anstatt nach einer Transmission hinter der Verbundglasscheibe in Wärme umgewandelt zu werden. Das ist besonders vorteilhaft bei Anwendungen, bei denen die Wärmetransmission reduziert werden soll, wie beispielsweise bei Fensterglas in Fahrzeugen oder Gebäuden. Trotz ihrer hohen Reflektivität ist eine silberhaltige Beschichtung für das menschliche Auge fast unsichtbar, sodass sie die Sicht durch das beschichtete Glas nicht beeinträchtigt.

Eine einzelne Silberschicht in der silberhaltigen Beschichtung (Reflexionsbeschichtung) kann eine sehr dünne Schicht (mit einer Dicke von wenigen Nanometern) aus reinem Silber sein, die auf die Glasoberfläche aufgetragen wird. Dies kann beispielsweise durch ein Verfahren wie das PVD erfolgen. Silber ist ein hervorragender Reflektor für Licht, insbesondere für Licht im infraroten Bereich und kann daher dazu beitragen, die Transmission von "Wärmestrahlung" durch die Scheibe zu minimieren und so die Erwärmung des Fahrzeuginnenraumes hinter der Scheibe zu reduzieren.

In einem Mehrschichtsystem kann die Silberschicht jedoch nur ein Element in einer komplexeren Struktur sein. Die Silberschicht ist in diesem Fall von weiteren Schichten umgeben, die dazu dienen, die optischen Eigenschaften der Beschichtung zu verbessern und zu optimieren. Diese zusätzlichen Schichten können aus verschiedenen Materialien bestehen und können beispielsweise dazu dienen, die Reflexionseigenschaften der Silberschicht zu verstärken oder unerwünschte Nebeneffekte zu minimieren.

Ist die silberhaltige Beschichtung als zweifaches Silberschichtsystem ausgeführt, gibt es beispielsweise zwei Schichten aus reinem Silber, die jeweils von anderen Schichten umgeben sind. Das kann dazu führen, dass die Reflexionseigenschaften des Systems noch weiter verbessert werden. Bei Ausführung eines dreifachen oder vierfachen Silberschichtsystems werden entweder drei oder vier Silberschichten aufgetragen, was zu einer noch höheren Reflexionsrate führen kann. Jede zusätzliche Silberschicht erhöht jedoch auch die Komplexität und die Kosten des Schichtungssystems, also der Reflexionsbeschichtung. Das Schichtsystem für eine einfache Silberbeschichtung kann beispielsweise für eine zweifache Silberbeschichtung wiederholt werden. Dasselbe kann für ein dreifaches oder vierfaches Schichtsystem gelten.

Es ist wichtig zu beachten, dass trotz des hohen Reflexionsvermögens der Silberschichten diese so aufgebaut sind, dass sie zusammengenommen das für das menschliche Auge sichtbare Lichtwellenlängenspektrum zu über 70 % transmittieren, da dies eine gesetzliche Vorgabe für Front- und Seitenscheiben bis zur B-Säule ist.

Mit einer zweifachen silberhaltigen Beschichtung kann ein "Total Transmission Solar"-Wert TTS von ca. 50% erreicht werden. Dieser Wert ist ein Maß für den Energieeintrag der Sonne durch die Frontscheibe, der den Anteil der direkt transmittierten Strahlungswärme und den Anteil der durch Wärmeabsorption der Scheibe in den Innenraum gelangenden Wärmestrahlung beschreibt. Je geringer der Wert, desto besser der Hitzeschutz (Sommerfunktion).

Mit zunehmender Ag-Schichtanzahl (1,2,3,4...) sinkt in der Regel der spezifische Schichtwiderstand und damit der Gesamtanschlusswiderstand der Frontscheibe. Ein-, zwei-, drei- oder vierfache silberhaltige Beschichtungen haben in der Regel geringe Anschlusswiderstände (sind niederohmig). Somit sind diese Schichten für die Erzeugung von Wärmeenergie aus elektrischer Energie weniger gut geeignet als Schichten mit höheren Widerständen. Bei gleicher, niedriger Spannung (12V) ist die Erhöhung der Schichtanzahl eine Möglichkeit, die Heizleistung zu steigern, aber anderseits durch die gesetzliche vorgeschriebene Lichttransmission begrenzt. Ferner können so auch mehr Produktionsschritte nötig sein.

Durch die Trennung der Sommerfunktion (mittels Infrarotreflektierende Silberschichten) und Winterfunktion (mittels hochohmiger Heizschichten) in einer Verbundglasscheibe durch Auftrag auf verschiedenen Grenzflächen innerhalb des Aufbaus können beide Funktionen optimal dargestellt werden. Während die 2- oder 3-fache Ausführung der Silberschichten auf der Innenseite des Außenglases für einen möglichst niedrigen TTS-Wert sorgt, bewirkt die hochohmige Schicht auf der im Verbund unberührbaren Außenseite des Innenglases in Kombination mit einer deutlich höheren elektrischen Spannung eine vielfach höhere Heizleistung, als sie bislang aus Anwendungen bekannt ist.

Hierfür kann ein zusätzlicher Spannungswandler erforderlich sein.

Es gibt Ausführungen, bei denen die Reflexionsbeschichtung eine dielektrische Spiegelschicht ist, die so ausgebildet ist, dass sie vornehmlich infrarotes Licht reflektiert.

Eine dielektrische Spiegelschicht ist eine Beschichtung, die aus mehreren übereinander liegenden dielektrischen Schichten besteht und die Eigenschaft hat, Lichtwellen bestimmter Wellenlängen zu reflektieren. Diese Schichten können aus verschiedenen Materialien bestehen und sind so aufeinander abgestimmt, dass sie Lichtwellen bestimmter Wellenlängen konstruktiv interferieren lassen, was zu einer erhöhten Reflexion führt. Bei dieser Erfindung ist die dielektrische Spiegelschicht so ausgelegt, dass sie vornehmlich infrarotes Licht reflektiert. Infrarotes Licht ist eine Wärmestrahlung, daher reduziert seine Reflexion den Wärmeeintrag durch die Verbundglas-Scheibe (in das Fahrzeug und verbessert den Fahrkomfort im Sommer). Trotz ihrer hohen Reflektivität ist die dielektrische Spiegelschicht für das menschliche Auge fast unsichtbar. Silberschichten können Teil der dielektrischen Spiegelschicht sein.

Ein dielektrischer Spiegel ist oftmals so ausgelegt, dass ein Reflexionsgrad des dielektrischen Spiegels in einem Wellenlängenbereich (beispielsweise infrarote Strahlung) ein Plateau aufweist, in anderen Wellenlängenbereichen (beispielsweise sichtbares Licht) jedoch niedrig ist und somit eine gute Transmission ermöglicht.

Es gibt Ausführungen, bei denen die Heizbeschichtung ein hochohmiges Material umfasst.

Ein hochohmiges Material kann ein Material sein, das einen hohen elektrischen Widerstand aufweist. Dies bedeutet, dass es den Fluss von elektrischem Strom durch das Material erschwert. In der Anwendung bei der Heizbeschichtung in der ausführungsgemäßen Verbundglas-Scheibe (Frontscheibe) kann das hochohmige Material dazu beitragen, einer höhere Heizleistung zu erzeugen, indem es die durch die zugeführte elektrische Energie effizient in Wärmeenergie umwandelt. Da die Beschichtung flächig aufgetragen ist, ist die Wärmeerzeugung auch homogen über die Scheibe verteilt. Dies ermöglicht eine schnelle und gleichmäßige Erwärmung der gesamten Scheibenfläche.

Hochohmige Materialien können aus einer Vielzahl von Materialien bestehen, darunter Metalle, Metalloxide, Halbleiter und ggf. auch an einem Übergang zu Isolatoren, wie beispielsweise Keramiken. Das hochohmige Material kann als Schicht aufgetragen im sichtbaren Spektrum transparent sein, also durchsichtig.

Die hohe Betriebsspannung, die durch das hochohmige Material ermöglicht wird, kann zu einer effizienteren Heizfunktion führen, da sie unter Berücksichtigung von Verfügbarkeiten von möglichen transparenten funktionalen Schichten, Aufheizgeschwindigkeit, geringeren Stromfluss und damit in der Folge geringere Kabelquerschnitte die Zuführung einer höheren elektrischen Energie ermöglicht als ein Material mit einem niedrigeren Widerstand. Die elektrische Energie kann durch den hohen Widerstand effizient in Wärmeenergie gewandelt werden, woraus ein verbessertes Heizen folgt. Dies kann zu einer schnelleren und effizienteren Entfrostung und Entfeuchtung der Scheibe führen. Zudem wird durch die hohe Betriebsspannung der technische Aufwand für die Spannungswandlung geringer.

Es gibt Ausführungen, bei denen die Heizbeschichtung eine ITO-, ZNO:Al- oder FTO-Schicht ist.

ITO (Indiumzinnoxid), ZNO:Al (aluminiumdotiertes Zinkoxid) und FTO (fluordotiertes Zinnoxid) sind Materialien, die aufgrund ihrer Eigenschaften als Heizbeschichtungen verwendet werden können. ITO, ZNO:Al und FTO sind Metalloxide mit hochohmigen Eigenschaften, was bedeutet, dass sie einen hohen elektrischen Widerstand aufweisen. Dies ermöglicht es ihnen, eine effiziente Heizleistung zu erzeugen, indem sie die zugeführte elektrische Energie effizient in Wärme umwandeln.

Die ITO-Schicht ist eine dünne, halbleitende Beschichtung, die aus Indiumzinnoxid besteht. Sie ist im sichtbaren Spektrum transparent und hat die Eigenschaft, infrarotes Licht gut zu reflektieren.

Die ZNO:Al-Shicht ist eine transparente Oxidhalbleiterschicht, die aus aluminiumdotiertem Zinkoxid besteht, das ein transparentes, elektrisch leitfähiges jedoch hochohmiges Oxid ist.

Die FTO-Schicht ist eine weitere Art von hochohmiger Heizbeschichtung, die aus fluordotiertem Zinnoxid besteht. Ähnlich wie ITO ist FTO im sichtbaren Spektrum transparent. Dies macht FTO ebenfalls zu einem geeigneten Material für Heizbeschichtungen in Verbundglas-Scheiben.

Die Materialien ITO, ZNO:Al und FTO können durch verschiedene Techniken auf die Innenseite der Innenscheibe aufgetragen werden, wie beispielsweise durch Sputtern oder als Slurry/Gel Aufsprühen. Ihre hohe Betriebsspannung ermöglicht eine effiziente Heizfunktion und erfordert einen geringeren Kabelquerschnitt.

ITO, ZNO:Al und FTO könne beispielsweise mit 200-400 V bestromt werden. Mit einer solchen Heizbeschichtung ist eine Heizleistung von beispielsweise 11 kW möglich statt den üblichen beispielsweise 0,5 kW, was einer etwa 22-mal höhere Heizleistung als bisher entspricht, wodurch folglich auch eine höhere Wärmeenergie erzeugt werden kann. Heizen einer Scheibe kann sonst mit 12-48 V üblich sein. Ferner reflektiert ITO, ZNO:Al oder FTO nur gering (diese haben einen Reflexionsgrad von ca. 3 Prozent).

Es gibt Ausführungen, bei denen die Verbundglas-Scheibe eine Windschutzscheibe für ein Fahrzeug ist.

Die Windschutzscheibe, auch als Frontscheibe bezeichnet, kann ein wesentlicher Bestandteil eines Fahrzeugs sein und dazu dienen, den Innenraum des Fahrzeugs vor Wind, Regen und anderen Umwelteinflüssen zu schützen, während sie gleichzeitig eine klare Sicht auf die Straße ermöglicht. Die Windschutzscheibe ist typischerweise aus Verbundglas gefertigt und besteht aus einer Außenscheibe und einer Innenscheibe, die durch eine Kunststoffzwischenschicht miteinander verbunden sind. Die Außenscheibe ist die äußere Glasplatte, die der Außenseite des Fahrzeugs und somit den Umwelteinflüssen wie Sonnenlicht, Wind und Regen ausgesetzt ist. Die Innenscheibe hingegen ist die innere Glasplatte, die dem Innenraum des Fahrzeugs zugewandt ist.

Ausführungsgemäß ist die Windschutzscheibe mit einer Kombination von Beschichtungen ausgestattet, die sowohl eine effektive Reflexion von Sonnenlicht zur Reduzierung der Innenraumerwärmung im Sommer als auch eine effiziente Heizfunktion zur schnellen und effizienten Entfrostung und Entfeuchtung der Scheibe im Winter ermöglicht.

Eine erfindungsgemäße Steuereinheit ist dazu ausgelegt, die Heizbeschichtung einer Verbundglas-Scheibe nach einem der vorhergehenden Ausführungen zu steuern, sodass die elektrische Energie, die der Heizbeschichtung zugeführt wird, an Umgebungsbedingungen anpassbar ist.

Eine Steuereinheit kann ein elektronisches Gerät oder System sein, das dazu dient, die Betriebsparameter oder Funktionen anderer Geräte oder Systeme zu steuern oder zu regeln. In diesem Fall ist die ausführungsgemäße Steuereinheit dazu ausgelegt, die Heizbeschichtung einer Verbundglas-Scheibe zu steuern. Dazu kann sie die Menge an elektrischer Energie, die der Heizbeschichtung zugeführt wird, regulieren und anpassen. Diese Regulierung und Anpassung kann basierend auf verschiedenen Parametern oder Umgebungsbedingungen erfolgen.

Ursprünglich funktioniert das Heizen der Scheibe meist über einen fest vorgegebenen Timer und den Bedienschalter, der das Heizen startet. Dahingegeben kann mittels der Steuerung die elektrische Energie bzw. die Heizzeit anhand von Umgebungsbedingungen angepasst werden.

Die elektrische Energie, die der Heizbeschichtung zugeführt wird, kann beispielsweise durch die Steuereinheit gesteuert werden, indem die Menge an elektrischer Energie, die der Heizbeschichtung zugeführt wird, reguliert wird. Dies kann beispielsweise durch die Steuerung der Spannung oder des Stroms erfolgen, der der Heizbeschichtung aus einer Stromquelle zugeführt wird. Die Stromquelle kann eine Batterie oder ein Generator sein. Die Steuereinheit kann dabei so konfiguriert sein, dass sie die elektrische Energie automatisch anpasst, beispielsweise basierend auf den aktuellen Umgebungsbedingungen oder auf Eingaben von einem Benutzer.

Die Umgebungsbedingungen können verschiedene Faktoren oder Parameter umfassen, die die Betriebsbedingungen oder Anforderungen an die Heizbeschichtung beeinflussen können. Beispiele für solche Umgebungsbedingungen können die Außentemperatur, die Innentemperatur des Fahrzeugs, die Feuchtigkeit oder die Sonneneinstrahlung sein. Die Steuereinheit kann Informationen über die aktuellen Umgebungsbedingungen von verschiedenen Sensoren oder Eingabegeräten erhalten, die in oder um das Fahrzeug herum angeordnet sein können.

Ferner kann die Steuereinheit diese Informationen über eine Schnittstelle aus einem Netzwerk abrufen. Ein solches Netzwerk kann ein Wireless Local Area Network (WLAN) sein, welches beispielsweise auf dem IEEE 802.11-Standard basieren kann und wird in Heimnetzwerken, Büros und öffentlichen Bereichen eingesetzt werden kann. Eine weitere Möglichkeit für das Netzwerk ist ein Wireless Personal Area Network (WPAN), wie beispielsweise Bluetooth, Wireless USB, ZigBee und Z-Wave. Ferner kann das Netzwerk auch ein Wireless Wide Area Network (WWAN) sein, wie beispielsweise Mobilfunktechnologien wie LTE und 5G. Auch ein Netzwerk wie ein Wireless Metropolitan Area Network (WMAN) ist möglich. Weitere Möglichkeiten für das Netzwerk umfassen ein Wireless Sensor Network (WSN), wie beispielsweise Netzwerke bestehen aus verteilten Sensoren, die Umgebungsdaten erfassen und drahtlos übertragen. Diese werden oft im Rahmen des Internet of Things (IoT) eingesetzt. Auch ein Satellite Network ist ein mögliches Netzwerk, welches Satelliten für die globale Kommunikation und Datenübertragung nutzt, insbesondere in abgelegenen Gebieten. Ferner ist auch ein Wireless Mesh Networks eine Option, bei der die Geräte selbst als Router fungieren und Daten weiterleiten.

Basierend auf diesen Informationen kann die Steuereinheit dann die elektrische Energie, die der Heizbeschichtung zugeführt wird, entsprechend anpassen, um eine effiziente Heizfunktion zur schnellen und effizienten Entfrostung und Entfeuchtung der Scheibe im Winter bereitzustellen.

Die Steuereinheit kann basierend auf den Informationen und einem entsprechenden (vorbestimmten) Kennfeld die elektrische Energie steuern. Ferner könnten auch Sensoren verwendet werden, um den Heizprozess zu überwachen, ein Feedbacksignal zu erzeugen, wodurch das Heizen somit geregelt wird. Hierzu können allerdings mehr Sensoren benötigt werden.

Ferner kann die Heizbeschichtung über die Steuereinheit mittels Puls-Weiten-Modellierung gesteuert werden. Die Puls-Weiten-Modellierung kann außentemperatur- und geschwindigkeitsabhängig sein.

Ferner kann eine Schalterkühlung verwendet werden, falls die Schalter der Puls-Weiten-Modellierung warm werden. Außerdem kann die Puls-Weiten-Modellierung so konfiguriert sein, dass steile Flanken vermieden werden, sodass die Schalter nicht warm werden.

Ferner können niederfrequente Schaltsignal (z.B. geringer als 100 Hz) verwendet werden. Auch eine Steuerung, einer kontinuierlichen angelegten Spannung, beispielswiese wie ein Dimmer ist möglich.

Ein erfindungsgemäßes Fahrzeug umfasst eine Verbundglas-Scheibe nach einer der obigen Ausführungen.

Das ausführungsgemäße Fahrzeug kann ein Auto, ein LKW, ein Bus, ein Zug, ein Geländewagen, ein landwirtschaftliches Fahrzeug, ein Baufahrzeug, ein Flugzeug, ein Schiff, ein Boot oder jedes andere Fahrzeug sein, das eine Frontscheibe erfordert. Es kann sich um ein herkömmlich angetriebenes Fahrzeug oder um ein Elektrofahrzeug handeln.

Die Frontscheibe des Fahrzeugs ist gemäß den oben beschriebenen Ausführungen konzipiert. Auf der Innenseite der Außenscheibe ist eine Reflexionsbeschichtung aufgebracht, die vornehmlich infrarotes Licht reflektiert und somit die Erwärmung des Fahrzeuginnenraumes im Sommer reduziert. Auf der Außenseite der Innenscheibe befindet sich eine Heizbeschichtung, die eine effiziente Heizfunktion im Winter ermöglicht.

Durch diese Kombination aus Reflexions- und Heizbeschichtung kann die Frontscheibe des Fahrzeugs sowohl im Sommer als auch im Winter optimale Eigenschaften aufweisen. Im Sommer wird die Erwärmung des Innenraums des Fahrzeuges durch die Reflexion von Sonnenlicht reduziert, während im Winter eine schnelle und effiziente Entfrostung und Entfeuchtung der Scheibe ermöglicht wird.

Es gibt Ausführungen, bei denen das Fahrzeug nach obiger Ausführung ferner eine Steuereinheit nach obiger Ausführung umfasst.

Die Steuereinheit in dem Fahrzeug kann dazu ausgelegt sein, die Heizbeschichtung der Frontscheibe zu steuern. Sie kann die Menge an elektrischer Energie, die der Heizbeschichtung zugeführt wird, regulieren und anpassen. Dies kann basierend auf verschiedenen Parametern oder Umgebungsbedingungen erfolgen, wie beispielsweise der Außentemperatur, der Innentemperatur des Fahrzeugs, der Feuchtigkeit oder der Sonneneinstrahlung.

Die Steuereinheit kann Informationen über die aktuellen Umgebungsbedingungen von verschiedenen Sensoren oder Eingabegeräten erhalten, die in oder um das Fahrzeug herum angeordnet sein können. Basierend auf diesen Informationen kann die Steuereinheit dann die elektrische Energie, die der Heizbeschichtung zugeführt wird, entsprechend anpassen, um eine effiziente Heizfunktion zur schnellen und effizienten Entfrostung und Entfeuchtung der Scheibe im Winter bereitzustellen. Die elektrische Energie, die der Heizbeschichtung zugeführt wird, kann durch eine Stromquelle wie eine Barriere oder einen Generator bereitgestellt werden und durch die Steuereinheit geregelt oder gesteuert werden.

Die Steuereinheit kann dabei so konfiguriert sein, dass sie die elektrische Energie automatisch anpasst, beispielsweise basierend auf den aktuellen Umgebungsbedingungen oder auf Eingaben von einem Benutzer. Sie kann beispielsweise eine Schnittstelle zu einem Netzwerk haben, über die sie aktuelle Umgebungsdaten abrufen kann oder über die sie bedient werden kann.

Durch die Integration der Steuereinheit in das Fahrzeug kann die Frontscheibe optimal genutzt und die im Fahrzeug bereitstehende Energie besser genutzt werden. Eine effiziente Entfrostung und Entfeuchtung verbesserten auch die Effizienz des Fahrzeuges.

Ausführungsbeispiele der Erfindung werden nun beispielhaft und unter Bezugnahme auf die beigefügte Zeichnung beschrieben, in der:
- Fig. 1: zeigt einen Querschnitt durch eine Verbundglas-Scheibe nach einem Ausführungsbeispiel;
- Fig. 2: zeigt ein Fahrzeug mit einer Verbundglasscheibe nach einem Ausführungsbeispiel; und
- Fig. 3: zeigt ein Fahrzeug mit einer Verbundglas-Scheibe, einer Steuerung und einer Stromquelle nach einem Ausführungsbeispiel.

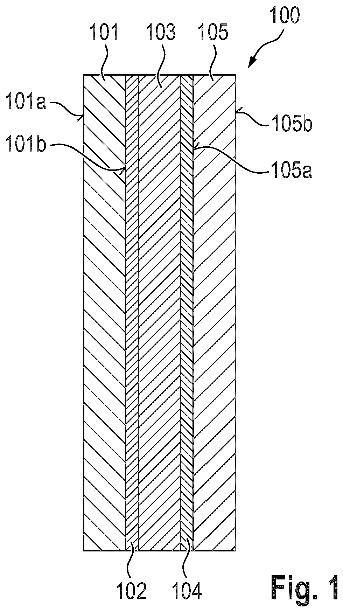

Fig. 1 zeigt einen Querschnitt durch eine Verbundglas-Scheibe 100 nach einem Ausführungsbeispiel.

Die Verbundglas-Scheibe 100 umfasst eine Außenscheibe 101, eine Reflexionsbeschichtung 102, eine PVB-Folie 103, eine Heizbeschichtung 104 und eine Innenscheibe 105. In dieser Reihenfolge würde ein Lichtstrahl von außen nach innen (in ein Fahrzeug mit der Verbundglasscheibe 100) verlaufen.

Die Außenscheibe 101 ist die erste Glasschicht der Verbundglasscheibe 100. Die erste Seite 101a ist die Außenseite der Außenscheibe 101 der Verbundglasscheibe 100, die der Außenwelt zugewandt ist. Sie ist den Umwelteinflüssen wie Wind, Regen und Sonnenlicht ausgesetzt. Auf die zweite Seite 101b Seite ist eine doppelte Silberschicht (Ag2) aufgebracht. Diese Schicht dient als Reflexionsbeschichtung 102 und reflektiert vornehmlich infrarotes Licht, um die Erwärmung des Fahrzeuginnenraums im Sommer zu reduzieren. Die zweite Seite 101b ist die der PVB-Folie 103 zugewandte Seite der Außenscheibe 101.

Die PVB-Folie 103 ist zwischen den beiden Glasschichten angeordnet. Diese Folie aus Polyvinylbutyral (PVB) verbindet die beiden Glasschichten miteinander und erhöht die Sicherheit der Scheibe 100, da sie bei einem Bruch die Splitter festhält.

Die Innenscheibe 105 ist die innere Glasschicht der Verbundglasscheibe 100, die dem Innenraum des Fahrzeugs zugewandt ist. Auf der dritten Seite 105a ist eine Beschichtung aus fluordotiertem Zinnoxid (FTO), aluminiumdotiertes Zinkoxid (ZNO:Al) oder Indium-Zinnoxid (ITO) aufgebracht. Diese Schicht dient als Heizbeschichtung 104 und kann durch Zufuhr von elektrischer Energie die Scheibe 100 erwärmen. Die dritte Seite 105a ist die der PVB-Folie 103 zugewandte Seite der Innenscheibe 105. Die vierte Seite 105b ist die Innenseite der Verbundglasscheibe 100, die dem Innenraum des Fahrzeugs zugewandt ist.

Die Kombination aus Reflexionsbeschichtung 102 und Heizbeschichtung 104 ermöglicht es, die Verbundglasscheibe 100 sowohl im Sommer als auch im Winter optimal zu nutzen. Im Sommer wird die Erwärmung des Fahrzeuginnenraums durch die Reflexion von Sonnenlicht reduziert, während im Winter eine schnelle und effiziente Entfrostung und Entfeuchtung der Scheibe 100 durch die Heizfunktion ermöglicht wird.

Ein Vertauschen der Positionen der Reflexionsbeschichtung 102 und der Heizbeschichtung 104 ist nachteilig, da bei einem Steinschlag Feuchtigkeit eintritt und dann auf eine bestromte/leitende Heizbeschichtung 104 trifft. Die Reflexionsbeschichtung 102 würde sich in diesem Fall jedoch nur mit der Zeit verfärben.

Alternative kann auch nur eine Verbundglas-Scheibe 100 mit einer Reflexionsbeschichtung 102 und keiner Heizbeschichtung 104 vorgesehen sein. Dann wird ein zusätzlicher Spannungswandler auf beispielsweise 48 V verwendet, wenn das Bordnetz nicht ohnehin 48 V bereitstellt.

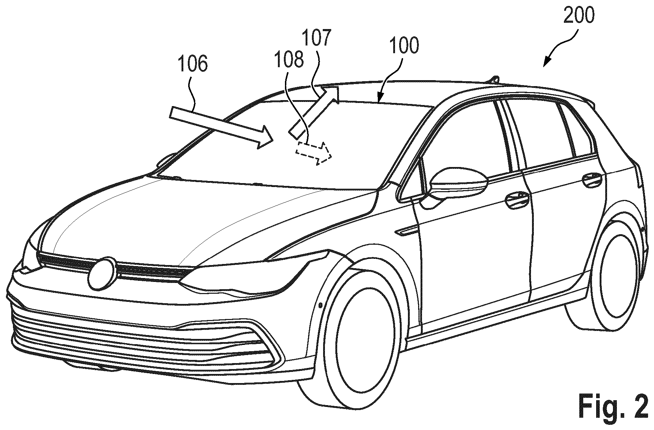

Fig. 2 zeigt ein Fahrzeug 200 mit einer Verbundglasscheibe 100 nach einem Ausführungsbeispiel.

Das Fahrzeug 200 umfasst eine Verbundglas-Scheibe 100, wie in Fig. 1 beschrieben. Fig. 2 zeigt eine Einstrahlung 106, eine Transmission 108 und eine Reflexion 107. Die Einstrahlung 106 repräsentiert die gesamte Sonnenstrahlung, die auf die Verbundglas-Scheibe 100 trifft. Ein Teil dieser Strahlung wird von der Reflexionsbeschichtung 102 reflektiert und zurück in die Umgebung abgegeben. Ein Teil der Strahlung wird durch die Verbundglas-Scheibe 100 transmittiert. Die Transmission 108 wird an Oberflächen im Inneren des Fahrzeuges 200 in Wärme umgewandelt und heizt somit den Innenraum des Fahrzeugs 200 auf. In diesem Fall wird die Transmission 108 auch als Total Transmission Solar bezeichnet. In diesem Ausführungsbeispiel beträgt die Transmission 108 beispielsweise ca. 48% der Sonneneinstrahlung 106, der Rest wird reflektiert oder in der Verbundglasscheibe 100 absorbiert.

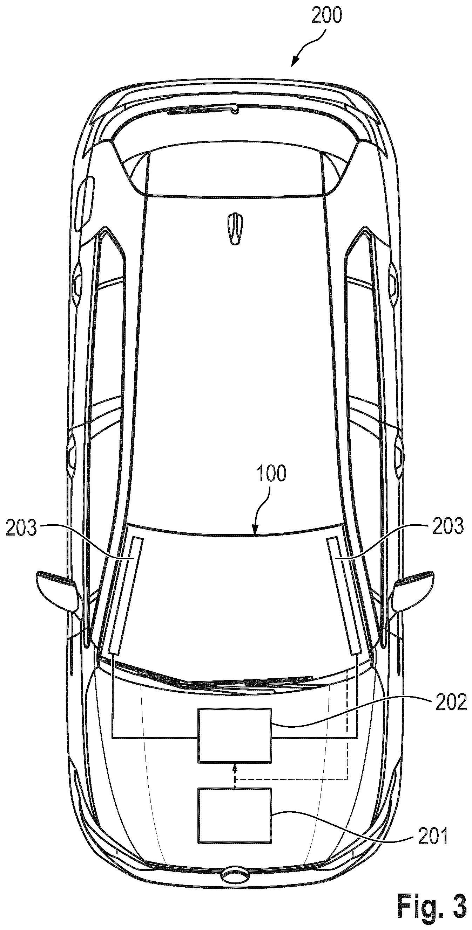

Fig. 3 zeigt ein Fahrzeug 200 mit einer Verbundglas-Scheibe 100, einer Steuerung 201 und einer Stromquelle 202 nach einem Ausführungsbeispiel.

Das Fahrzeug 200 umfasst eine Verbundglas-Scheibe 100, eine Stromquelle 202 und eine Steuerung 201.

Die Verbundglas-Scheibe 100 ist die Verbundglas-Scheibe wie in Fig. 1 beschrieben. Die Stromquelle 202 versorgt die Heizbeschichtung 104 der Verbundglas-Scheibe 100 mit elektrischer Energie. Dies ist durch die Verbindung zu der linken und rechten unteren Ecke der Verbundglas-Scheibe 100 gezeigt. Dort wird die Heizbeschichtung 104 der Verbundglasscheibe 100 kontaktiert, beispielsweise mittels Sammelschienen 203, die links und rechts an einer Kante der Verbundglasscheibe 100 entlanglaufen (beispielsweise unterhalb einer schwarzen Bedruckung auf der Verbundglasscheibe 100). Diese Stromquelle 202 kann eine Batterie oder ein Generator sein, die in das Fahrzeug 200 integriert sind. Die Batterie kann eine herkömmliche Autobatterie oder eine Hochleistungsbatterie sein, wie sie in Elektrofahrzeugen verwendet wird. Der Generator kann ein Teil des Motors des Fahrzeugs 200 sein und elektrische Energie durch die Umwandlung von mechanischer Energie erzeugen. Die Stromquelle 202 liefert die elektrische Energie, die von der Heizbeschichtung 104 in Wärme umgewandelt wird, um die Scheibe 100 zu heizen. Die Menge an elektrischer Energie, die der Heizbeschichtung 104 zugeführt wird, kann durch die Steuereinheit 201 reguliert werden, um eine effiziente Heizfunktion zu gewährleisten.

Die Steuereinheit 201 ist ein elektronisches Gerät oder System, das dazu dient, die Betriebsparameter oder Funktionen anderer Geräte oder Systeme zu steuern oder zu regeln. In diesem Fall ist die Steuereinheit 201 dazu ausgelegt, die Heizbeschichtung 104 der Verbundglas-Scheibe 100 zu steuern. Dies ist durch die Verbindungen zu der Stromquelle 202 und der Verbundglas-Scheibe 100 dargestellt. Somit kann entweder die Stromquelle 202 direkt oder ein Schalt- bzw. Dimmmechanismus in der Verbundglas-Scheibe 100 gesteuert werden. Ferner könnte auch ein Schalt- bzw. Dimmmechanismus, der an einer anderen Stelle im Fahrzeug 200 verbaut ist dafür genutzt werden, beispielsweise auch innerhalb der Steuerung 201. Sie kann die Menge an elektrischer Energie, die der Heizbeschichtung 104 zugeführt wird, regulieren und anpassen. Dies kann basierend auf verschiedenen Parametern oder Umgebungsbedingungen erfolgen, wie beispielsweise der Außentemperatur, der Innentemperatur des Fahrzeugs 200, der Feuchtigkeit oder der Sonneneinstrahlung 106. Die Steuereinheit 201 kann Informationen über die aktuellen Umgebungsbedingungen von verschiedenen Sensoren oder Eingabegeräten erhalten, die in oder um das Fahrzeug 200 herum angeordnet sein können. Basierend auf diesen Informationen kann die Steuereinheit 201 dann die elektrische Energie, die der Heizbeschichtung 104 zugeführt wird, entsprechend anpassen, um eine effiziente Heizfunktion zur schnellen und effizienten Entfrostung und Entfeuchtung der Scheibe 100 im Winter bereitzustellen.

### Bezugszeichenliste

- 100: Verbundglas-Scheibe
- 101: Außenscheibe
- 101a: erste Seite
- 101b: zweite Seite
- 102: Reflexionsbeschichtung
- 103: PVB-Folie
- 104: Heizbeschichtung
- 105: Innenscheibe
- 105a: dritte Seite
- 105b: vierte Seite
- 106: Einstrahlung
- 107: Reflexion
- 108: Transmission
- 200: Fahrzeug
- 201: Steuerung
- 202: Stromquelle

## Patentansprüche

1. Eine Verbundglas-Scheibe (100), umfassend eine Außenscheibe (101), eine Innenscheibe (105), und eine Kunststoffzwischenfolie (103), die zwischen der Außenscheibe (101) und der Innenscheibe (105) angeordnet ist, ferner umfassend: eine Reflexionsbeschichtung (102), die auf einer Seite der Außenscheibe (101) aufgebracht ist, die der Kunststoffzwischenlage (103) zugewandt ist, und eine Heizbeschichtung (104), die auf einer Seite der Innenscheibe (105) aufgebracht ist, die der Kunststoffzwischenlage (103) zugewandt ist, wobei die Heizbeschichtung (104) dazu ausgelegt ist mit elektrischer Energie mit einer Spannung von 200 V bis 800 V versorgt zu werden, um die Verbundglas-Scheibe (100) zu heizen.

2. Verbundglas-Scheibe (100) nach Anspruch 1, wobei die Reflexionsbeschichtung (102) aus ein-, zwei-, drei- oder vierfache silberhaltigen Beschichtungen ausgeführt ist.

3. Verbundglas-Scheibe (100) nach einem der vorhergehenden Ansprüche, wobei die Reflexionsbeschichtung (102) eine dielektrische Spiegelschicht ist, die so ausgebildet ist, dass sie vornehmlich infrarotes Licht reflektiert.

4. Verbundglas-Scheibe (100) nach einem der vorhergehenden Ansprüche, wobei die Heizbeschichtung (104) ein hochohmiges Material umfasst.

5. Verbundglas-Scheibe (100) nach einem der vorhergehenden Ansprüche, wobei die Heizbeschichtung (104) ITO, ZNO:Al oder FTO umfasst.

6. Verbundglas-Scheibe (100) nach Anspruch 5, wobei die Heizbeschichtung (104) eine ITO-, ZNO:Al- oder FTO-Schicht ist.

7. Verbundglas-Scheibe (100) einem der vorhergehenden Ansprüche, wobei die Verbundglas-Scheibe (100) eine Windschutzscheibe für ein Fahrzeug (200) ist.

8. Eine Steuereinheit (201) dazu ausgelegt, die Heizbeschichtung (104) einer Verbundglas-Scheibe (100) nach einem der vorhergehenden Ansprüche zu steuern, sodass die elektrische Energie, die der Heizbeschichtung (104) zugeführt wird, an Umgebungsbedingungen anpassbar ist.

9. Fahrzeug (200), umfassend: eine Verbundglas-Scheibe (100) nach einem der Ansprüche 1 bis 7.

10. Fahrzeug (200) nach Anspruch 9, ferner umfassend: eine Steuereinheit (201) nach Anspruch 8.
